# FASCICULE DE BREVET EUROPEEN

(11) **EP 2 627 809 B1**
(45) Date de publication et mention de la délivrance du brevet: **17.07.2019**
(21) Numéro de dépôt: 11832091.0
(22) Date de dépôt: 10.10.2011
(51) Int. Cl.: B21F 27/12, F01D 5/14, F04D 29/02, D03D 13/00, D03D 15/02, D03D 23/00, B64C 11/26, D03D 25/00, F04D 29/32

(54) **PROCEDE DE FABRICATION D'UNE STRUCTURE FIBREUSE METALLIQUE PAR TISSAGE**
VERFAHREN ZUR HERSTELLUNG EINER METALLFASERSTRUKTUR DURCH WEBEN
METHOD FOR PRODUCING A FIBROUS METAL STRUCTURE BY MEANS OF WEAVING

(30) Priorité: 11.10.2010 FR 1058237
(43) Date de publication de la demande: 21.08.2013
(73) Titulaire: Safran Aircraft Engines, 75015 Paris (FR)
(72) Inventeur: GODON, Thierry, F-77550 Moissy-cramayel Cedex (FR); DAMBRINE, Bruno, F-77550 Moissy-cramayel Cedex (FR); PERROUX, Alain, F-77550 Moissy-cramayel Cedex (FR)
(74) Mandataire: Camus, Olivier Jean-Claude
(86) Numéro de dépôt international: PCT/FR2011/052361
(87) Numéro de publication internationale: WO 2012/049414

(56) Documents cités:
- GB-A- 313 947
- GB-A- 830 908
- SU-A1- 895 582
- US-A1- 2008 237 405
- US-A1- 2009 111 346

## Description

La présente invention concerne un procédé de fabrication d'une structure fibreuse métallique par tissage permettant la réalisation d'une pièce massive, telle que par exemple un renfort métallique d'aube de turbomachine.

Plus particulièrement l'invention concerne un procédé de fabrication par tissage permettant de réaliser un renfort métallique de bord d'attaque d'aube de turbomachine.

Le domaine de l'invention est celui des turbomachines et plus particulièrement celui des aubes de soufflante, en matériau composite ou métallique, de turbomachine et dont le bord d'attaque comporte un renfort structurel métallique.

Toutefois, l'invention est également applicable à la réalisation d'un renfort métallique destiné à renforcer un bord d'attaque ou un bord de fuite d'aube de tout type de turbomachine, terrestre ou aéronautique, et notamment un turbomoteur d'hélicoptère ou un turboréacteur d'avion mais également d'hélices telles que des hélices de double soufflantes contrarotatives non carénées (« open rotor » en langue anglaise).

L'invention est également applicable à la réalisation de toutes pièces massives de forme géométrique complexe.

On rappelle que le bord d'attaque correspond à la partie antérieure d'un profil aérodynamique qui fait face au flux d'air et qui divise l'écoulement d'air en un écoulement d'air d'intrados et en un écoulement d'air extrados. Le bord de fuite correspond à la partie postérieure d'un profil aérodynamique où se rejoignent les écoulements intrados et extrados.

Les aubes de turbomachine, et notamment les aubes de soufflante, subissent d'importantes contraintes mécaniques, liées notamment à la vitesse de rotation, et doivent satisfaire à des conditions strictes de poids et d'encombrement.

Par conséquent, on utilise des aubes en matériaux composites qui sont plus légères et qui ont une meilleure tenue à la chaleur.

Il est connu d'équiper les aubes de soufflante d'une turbomachine, réalisées en matériaux composites, d'un renfort structurel métallique s'étendant sur toute la hauteur de l'aube et au-delà de leur bord d'attaque comme mentionné dans le document EP1908919. Un tel renfort permet de protéger l'aubage composite lors d'un impact d'un corps étranger sur la soufflante, tel que par exemple un oiseau, de la grêle ou encore des cailloux.

En particulier, le renfort structurel métallique protège le bord d'attaque de l'aube composite en évitant des risques de délaminage, de rupture de fibre ou encore d'endommagement par décohésion fibre/matrice.

De façon classique, une aube de turbomachine comporte une surface aérodynamique s'étendant, selon une première direction, entre un bord d'attaque et un bord de fuite et, selon une deuxième direction sensiblement perpendiculaire à la première direction, entre un pied et un sommet de l'aube. Le renfort structurel métallique épouse la forme du bord d'attaque de la surface aérodynamique de l'aube et s'étend selon la première direction au-delà du bord d'attaque de la surface aérodynamique de l'aube pour épouser le profil de l'intrados et de l'extrados de l'aube et selon la deuxième direction entre le pied et le sommet de l'aube.

De façon connue, le renfort structurel métallique est une pièce métallique en titane réalisée entièrement par fraisage à partir d'un bloc de matière.

Cependant, le renfort métallique d'un bord d'attaque d'aube est une pièce complexe à réaliser, nécessitant de nombreuses opérations de reprises et des outillages complexes impliquant des coûts de réalisation importants.

Il est connu de réaliser des pièces massives, et notamment des renforts métalliques d'aube de turbomachine à partir d'une structure fibreuse métallique tridimensionnelle réalisée par tissage de fils métallique et d'un procédé de pressage isostatique à chaud dans un outillage provoquant l'agglomération des fils métalliques de la structure fibreuse métallique de manière à obtenir une pièce massive, ce procédé est décrit dans la demande de brevet FR0858098.

Classiquement, le tissage de la structure fibreuse est réalisé par tissage au moyen d'une pluralité de fils de chaîne et de fils de trame métalliques dont le diamètre des fils est de l'ordre de quelques dixièmes de millimètres, typiquement entre 0,1mm et 0,3mm.

La structure fibreuse ainsi obtenue par tissage est une structure plane et relativement rigide qu'il est nécessaire de déformer pour obtenir une structure fibreuse préformée de façon à permettre son introduction dans un outillage de forme.

Dans le cadre de la réalisation d'un renfort d'aube de turbomachine, la structure fibreuse est tissée avec des fils à base de titane qu'il est difficile de mettre en forme notamment à cause de la limite élastique élevée du titane.

C'est pourquoi, la structure fibreuse est déformée au moyen d'un outillage spécifique, telle qu'une plieuse avant sa mise en place dans l'outillage. La taille de la structure fibreuse à préformer est donc dépendante des dimensions de la plieuse. Ainsi, les dimensions de tissage des structures fibreuses sont directement limitées par la capacité de la plieuse disponible sur site.

Le document US 2009/0111346 A1 divulgue un procédé de fabrication d'une structure fibreuse métallique par tissage en deux dimensions au moyen de fils de chaîne métalliques et de fils de trame métalliques. Parmi les fils de trame métalliques formant la structure principale de la structure fibreuse, des fils de trame métalliques comportant une zone pliée en forme de U sont insérés dans la structure fibreuse.

Dans ce contexte, l'invention vise à résoudre les problèmes mentionnés ci-dessus, en proposant un procédé de tissage permettant d'obtenir des structures fibreuses de dimensions importantes et ne dépendant pas de la capacité de l'outillage de déformation disponible.

A cette fin, l'invention propose un procédé de fabrication d'une structure fibreuse métallique en trois dimensions selon la revendication 1.

On entend par agrafe, une pièce métallique, telle qu'un fil métallique, recourbée ou pliée comportant deux branches d'extrémité reliées par un élément de jonction de façon à former par exemple une pièce sensiblement en forme de U ou de V.

On entend par foulée un espace formé par deux fils de chaîne permettant l'introduction d'un fil de trame.

Grâce à l'invention, il est possible de réaliser simplement une structure fibreuse de grande dimension dont la forme est donnée lors de l'étape de tissage par la forme des agrafes faisant offices de fils de trame. Ainsi, le procédé selon l'invention permet de réaliser un tissage d'une structure fibreuse en trois dimensions.

Ainsi selon l'invention, le tissage de chacune des branches de l'agrafe dans une foulée de deux fils de chaine est réalisé selon deux plans distincts de tissage. Ces plans de tissage peuvent être parallèles ou non, la disposition des plans de tissage des deux branches étant fonction de la forme de l'agrafe.

Le procédé selon l'invention permet ainsi de s'affranchir d'une étape indépendante de déformation de la structure fibreuse au moyen d'un outillage spécifique relativement coûteux et limitant par ses dimensions les dimensions de la structure fibreuse.

Ainsi, par exemple pour réaliser un renfort métallique d'aube de turbomachine, il suffit simplement de positionner la structure fibreuse tissée dans un outillage de forme pour réaliser la pièce finale au moyen d'un procédé de compaction à chaud.

La préforme de la structure fibreuse est donnée par l'étape de tissage en elle-même, le procédé ne nécessite pas par conséquent d'étape ultérieure de déformation de la structure fibreuse par forgeage à froid et/ou à chaud avec un outillage, telle qu'une plieuse, de façon à imposer un angle particulier à la structure fibreuse.

Le procédé de fabrication d'une structure fibreuse métallique selon l'invention peut également présenter une ou plusieurs des caractéristiques ci-dessous, considérées individuellement ou selon toutes les combinaisons techniquement possibles :
- préalablement à ladite étape de tissage ledit procédé comporte une étape de réalisation desdites agrafes métalliques par pliage de tronçons métalliques de forme rectiligne ;
- préalablement à ladite étape de pliage ledit procédé comporte une étape de découpe d'une pluralité de tronçons métalliques ;
- lesdites agrafes métalliques sont pliées lors de ladite étape de pliage en forme de U et/ou en forme de V.

L'invention a également pour objet un procédé de réalisation d'une pièce massive caractérisé en ce qu'il comporte :
- les étapes de fabrication d'une structure fibreuse selon l'invention ;
- une étape de pressage isostatique à chaud de ladite structure fibreuse provoquant l'agglomération des fils métalliques de ladite structure fibreuse de manière à obtenir une pièce massive.

Avantageusement, ladite pièce massive est un renfort métallique de bord d'attaque ou de bord de fuite d'aube de soufflante turbomachine.

Avantageusement, ladite pièce massive est un renfort métallique d'hélice.

L'invention a également pour objet une structure fibreuse selon la revendication 8 réalisée par le procédé de fabrication selon l'invention caractérisée en ce qu'elle est formée par une pluralité de fils de chaine et une pluralité de fils de trame tissées, les fils de trame étant formés par des agrafes métalliques préformés.

Avantageusement, ladite pluralité de fils de chaîne et ladite pluralité de fils de trame sont des fils métalliques à base de titane et/ou des fils SiC-Titane et/ou des fils SiC-Bore et/ou des fils SiC-SiC.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue latérale d'une aube comportant un renfort structurel métallique de bord d'attaque obtenu à partir d'une structure fibreuse au moyen d'un procédé de fabrication selon l'invention ;
- la figure 2 est une vue partielle en coupe de la figure 1 selon un plan de coupe AA ;
- la figure 3 est un schéma synoptique présentant les principales étapes de fabrication d'une structure fibreuse métallique du procédé selon l'invention par exemple pour réaliser un renfort structurel métallique de bord d'attaque d'aube de turbomachine ;
- la figure 4 illustre une vue partielle de la structure fibreuse lors de la première étape du procédé de fabrication selon l'invention ;
- la figure 5 illustre une vue partielle de la structure fibreuse lors de la deuxième étape du procédé de fabrication selon l'invention :
- la figure 6 illustre de manière schématique une vue de coté d'une portion de la structure fibreuse lors de la troisième étape du procédé de fabrication selon l'invention :
- la figure 7 illustre de manière schématique une vue en coupe de la structure fibreuse illustrée à la figure 6 selon un axe B-B ;
- la figure 8 illustre une vue partielle en perspective de la structure fibreuse finale obtenue par le procédé de fabrication selon l'invention.

Dans toutes les figures, les éléments communs portent les mêmes numéros de référence sauf précision contraire.

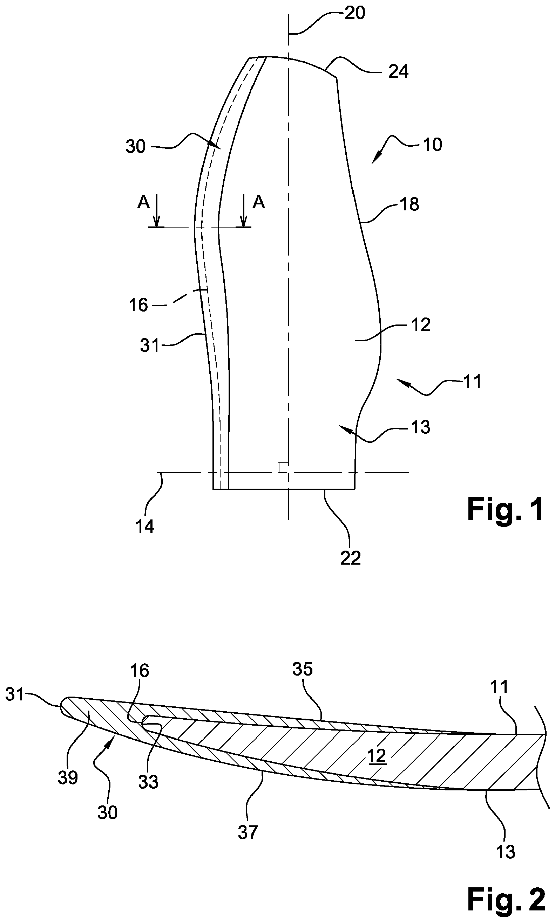

La figure 1 est une vue latérale d'une aube comportant un renfort structurel métallique de bord d'attaque obtenu au moyen du procédé de réalisation selon l'invention.

L'aube 10 illustrée est par exemple une aube mobile de soufflante d'une turbomachine (non représentée).

L'aube 10 comporte une surface aérodynamique 12 s'étendant selon une première direction axiale 14 entre un bord d'attaque 16 et un bord de fuite 18 et selon une deuxième direction radiale 20 sensiblement perpendiculaire à la première direction 14 entre un pied 22 et un sommet 24.

La surface aérodynamique 12 forme la face extrados 13 et intrados 11 de l'aube 10, seul la face extrados 13 de l'aube 10 est représentée sur la figure 1. L'intrados 11 et l'extrados 13 forment les faces latérales de l'aube 10 qui relient le bord d'attaque 16 au bord de fuite 18 de l'aube 10.

Dans ce mode de réalisation, l'aube 10 est une aube composite obtenue typiquement par mise en forme d'une texture fibreuse tissée. A titre d'exemple, le matériau composite utilisé peut être composé par un assemblage de fibres de carbone tissées et d'une matrice résineuse, l'ensemble étant formé par moulage au moyen d'un procédé d'injection de résine de type RTM (pour « Resin Transfer Molding ») ou encore VARRTM (pour Vaccum Resin Transfer Molding).

L'aube 10 comporte un renfort structurel métallique 30 collé au niveau de son bord d'attaque 16 et qui s'étend à la fois selon la première direction 14 au-delà du bord d'attaque 16 de la surface aérodynamique 12 de l'aube 10 et selon la deuxième direction 20 entre le pied 22 et le sommet 24 de l'aube.

Comme représenté à la figure 2, le renfort structurel 30 épouse la forme du bord d'attaque 16 de la surface aérodynamique 12 de l'aube 10 qu'il prolonge pour former un bord d'attaque 31, dit bord d'attaque du renfort.

De façon classique, le renfort structurel 30 est une pièce monobloc comportant une section sensiblement en forme de V présentant une base 39 formant le bord d'attaque 31 et prolongée par deux flancs latéraux 35 et 37 épousant respectivement l'intrados 11 et extrados 13 de la surface aérodynamique 12 de l'aube. Les flancs 35, 37 présentent un profil effilé ou amincie en direction du bord de fuite de l'aube.

La base 39 comporte un profil interne 33 arrondi apte à épouser la forme arrondie du bord d'attaque 16 de l'aube 10.

Le renfort structurel 30 est métallique et préférentiellement à base de titane. Ce matériau présente en effet une grande capacité d'absorption de l'énergie due aux chocs. Le renfort est collé sur l'aube 10 au moyen de colle connue de l'homme du métier, comme par exemple une colle cyanoacrylique ou encore époxy.

Ce type de renfort structurel métallique 30 utilisé pour le renfort d'aube composite de turbomachine est plus particulièrement décrit notamment dans la demande de brevet EP1908919.

Le procédé selon l'invention permet de réaliser notamment un renfort structurel tel qu'illustré à la figure 2, la figure 2 illustrant le renfort 30 dans son état final.

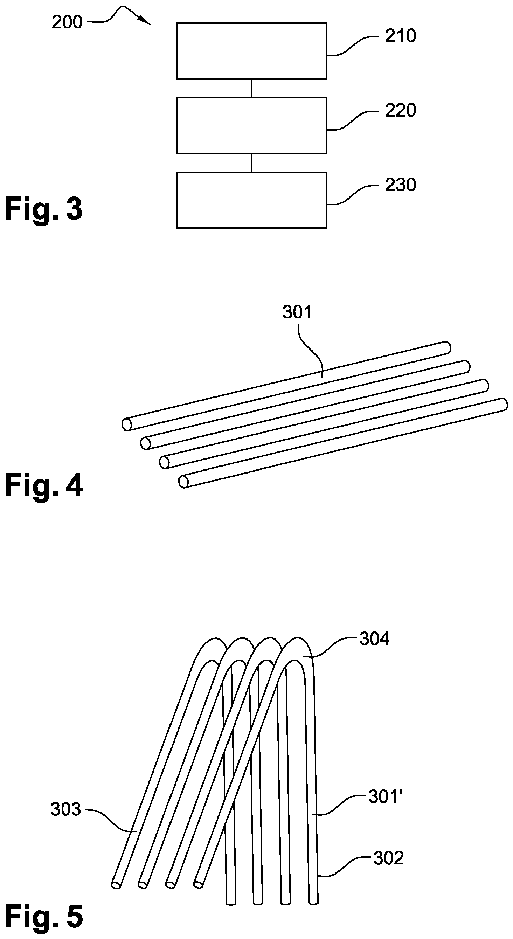

La figure 3 représente un schéma synoptique illustrant les principales étapes d'un procédé de fabrication 200 d'une structure fibreuse métallique 300 permettant de réaliser par exemple un renfort structurel métallique 30 de bord d'attaque d'aube 10 tel qu'illustré aux figures 1 et 2.

La première étape 210 du procédé de fabrication 200 est une étape de découpe d'une pluralité de tronçons métalliques 301 à partir d'un fil métallique continue par exemple issu d'une filière, dont la longueur de chaque tronçon 301 est déterminée en fonction de la pièce finale à réaliser. Des tronçons métalliques 301 ainsi découpés sont illustrés à la figure 1. Chaque tronçon métallique 301 peut donc avoir une longueur spécifique en fonction de sa localisation dans le maillage de la structure fibreuse.

Le diamètre des tronçons métalliques 301 peut varier en fonction des besoins de l'utilisateur, et de l'épaisseur matière nécessaire pour la réalisation de la pièce. La détermination du diamètre des tronçons est réalisée en fonction d'un compromis entre souplesse de la structure fibreuse et épaisseur matière nécessaire dans l'outillage.

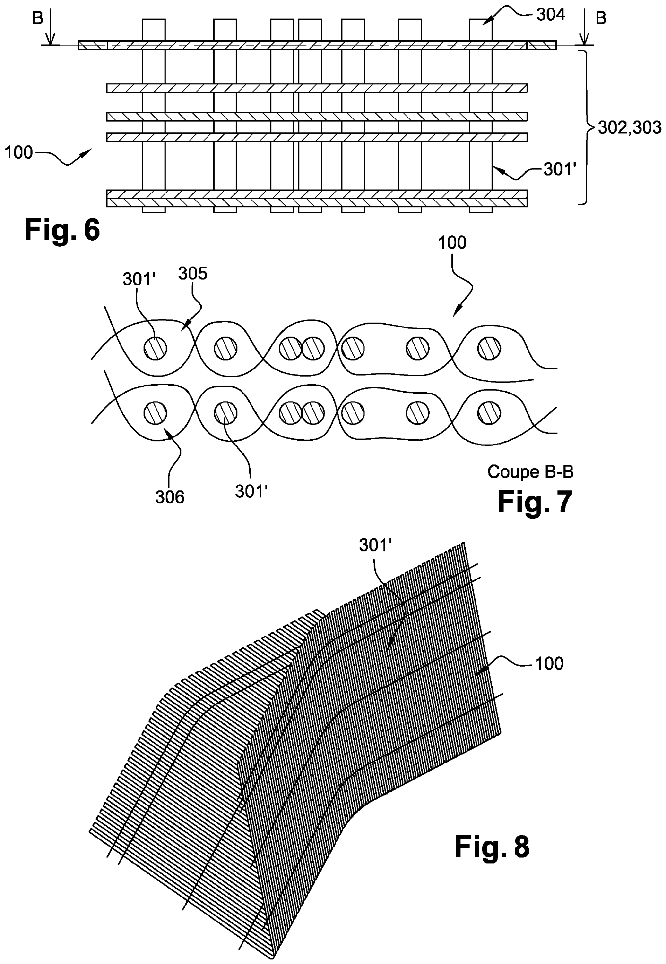

La deuxième étape 220 du procédé de fabrication 200 est une étape de formage à froid ou de mise en forme des tronçons métalliques 301 découpées lors de la première étape 210. Cette deuxième étape est illustrée à la figure 6.

Cette deuxième étape permet la mise en forme à froid (i.e. à température ambiante) de chaque tronçon métallique 301 rectiligne par déformation plastique de façon à obtenir une tronçon métallique préformé 301' dont la géométrie est déterminée en fonction de la pièce finale à réaliser et notamment en fonction de la forme de l'outillage de compaction servant à la réalisation de la pièce finale.

Les tronçons métalliques 301' sont déformés au moyen d'un outillage simple qu'il est possible d'actionner manuellement, la déformation individuelle de chaque tronçon ne nécessitant pas des moyens hydrauliques conséquent pour réaliser la déformation. Avantageusement, l'outillage de déformation est un outillage classique de déformation qu'il est possible d'automatiser et de calibrer tant au niveau de la forme finale des tronçons métalliques 301' qu'en force de pression en fonction des besoins de l'utilisateur.

Ainsi, les tronçons métalliques 301' peuvent être déformés de façon individuelle ou par groupe formé par une pluralité de tronçons métalliques.

L'étape 220 de déformation des tronçons permet ainsi de passer d'un tronçon métallique 301 de forme rectiligne à un tronçon métallique 301' préformé de la forme d'une agrafe comportant deux branches 302 et 303 sensiblement rectiligne reliées entre-elles par un élément de jonction 304 ayant subi au moins une déformation. Les longueurs des branches 302 et 303 peuvent être différentes pour une même agrafe. Le tronçon métallique 301 peut être aussi entièrement ou partiellement écrasé (par exemple pour une restriction d'épaisseur locale) ou bien issu d'un profil non circulaire mais de type carré, rectangulaire, hexagonale, etc.

Dans le cadre de la réalisation d'un renfort métallique d'aube de turbomachine, les tronçons 301' sont avantageusement pliés en forme de U ou de V.

La troisième étape 230 du procédé de fabrication 200 est une étape de tissage tridimensionnel d'une structure fibreuse 100 telle qu'illustrée aux figures 6, 7 et 8.

La figure 6 illustre de manière schématique une vue de coté d'une portion de la structure fibreuse 100 obtenue par tissage de tronçons métalliques préformés lors de la deuxième étape.

La figure 7 illustre de manière schématique une vue en coupe de la structure fibreuse 100 selon l'axe B-B représenté à la figure 7.

Enfin, la figure 8 est une vue en perspective d'une portion de la structure fibreuse 100 obtenue par le procédé de fabrication 200 selon l'invention.

L'étape 230 de tissage permet de réaliser une ou plusieurs structure(s) fibreuse(s) métallique(s) 100 en trois dimensions pour la réalisation de la pièce finale.

A ce titre, la structure fibreuse 100 est formée par une pluralité de « fils de chaîne » et de « fils de trame » ; les tronçons métalliques préformés 301' faisant office de fils de trame dans notre exemple de réalisation.

L'étape de tissage 230 est réalisée par tissage successif de chaque tronçon métallique préformé 301' faisant office de fil de trame dans des foulées formées par deux fils de chaîne.

Plus précisément, le tissage est réalisé par introduction de chacune des branches 302 et 303 de chaque tronçon métallique préformé 301' dans au moins une foulée 305, 306 formée par deux fils de chaîne.

On entend par foulée un espace formé par deux fils de chaîne permettant l'introduction d'un fil de trame.

L'étape de tissage 230 est réalisée au moyen d'un outillage de tissage de type métier à tisser comportant des moyens aptes à former au moins deux foulées 305, 306 distinctes s'ouvrant et se refermant de manière simultanée de sorte que les deux branches 302, 303 de chaque tronçon métallique préformé 301' sont tissées simultanément dans au moins deux foulées 305, 306 distinctes.

Ainsi, chaque tronçon métallique 301' est tissé par l'introduction de chacune de ses branches dans au moins une foulée 305, 306 de façon à former la structure fibreuse 100.

Chaque tronçon métallique préformé 301' est inséré dans les foulées 306, 307 au moyen par exemple d'une fourchette supportant le tronçon métallique préformé 301' et venant le positionner dans les foulées correspondantes.

Les motifs de tissage de la structure fibreuse 100 sont classiquement des motifs de tissage utilisés par exemple dans le domaine du tissage de fibres composites comme par exemple les motifs de tissage de type sergé, taffetas, satin ou encore les motifs de tissage décrits dans la demande de brevet EP1526285, excepté que le fil de trame est un fil préformé et non rectiligne.

Les tronçons métalliques sont principalement des fils à base de titane. Toutefois, il est possible d'incorporer dans le tissage des tronçons métalliques à base de carbure de silicium et de titane (SiC-Ti), de fils enduits de Bore (fil SiC-Bore) ou de Carbure de Silicium (fil SiC-SiC).

D'une façon générale, la désignation d'une fibre SiC-Ti ou SiC/Ti désigne pour l'homme du métier une fibre SiC induite d'un alliage à base de titane.

Les tronçons métalliques 301, 301' ont sensiblement un diamètre variant entre 0,1mm et 5mm.

La structure fibreuse 100 est ensuite compactée dans un outillage de forme par pressage isostatique à chaud (HIP pour Hot Isostatic Pressing en langue anglaise).

Le pressage isostatique à chaud est un procédé de fabrication très utilisé et connu pour réduire la porosité des métaux et influer sur la densité de nombreux métaux, tels que les céramiques. Le procédé de pressage isostatique permet d'améliorer en outre les propriétés mécaniques, l'exploitabilité des matériaux.

Le pressage isostatique est réalisé à haute température (classiquement entre 400°C et 1400°C, et de l'ordre de 1000°C pour le titane) et à pression isostatique.

Ainsi, l'application de la chaleur combinée à la pression interne élimine les espaces vides de la structure fibreuse 100, ainsi que les microporosités au moyen d'une combinaison de déformation plastique, de fluage et de soudage diffusion de façon à former la pièce finale.

Dans le cas de réalisation d'un renfort métallique d'aube de turbomachine, la pièce finale comporte les profils, interne et externe, du renfort métallique 30. La pièce finale réalisée est ensuite démoulée de l'outillage.

L'étape de pressage isostatique est réalisée sous vide, avantageusement sous vide secondaire soit dans un outillage soudé dans lequel le vide secondaire est réalisé, soit sous sac à l'autoclave ; le choix du procédé dépendant du nombre de pièces à produire. Le vide secondaire permet d'éviter la présence d'oxygène dans l'outillage et au niveau de la structure fibreuse, lors de l'étape de pressage isostatique du titane.

L'outillage est réalisé dans un alliage mécanique dit superalliage ou alliage à haute performance.

Le pressage isostatique peut comporter préalablement une étape de nettoyage, de dégraissage et/ou d'une attaque chimique de la structure fibreuse de façon à supprimer les impuretés résiduelles de la structure fibreuse.

Avantageusement, l'étape de nettoyage des impuretés est réalisée par trempage de l'ensemble fibreux dans un bain d'agent nettoyant ou d'agent chimique.

En association avec ces principales étapes de réalisation, la pièce après compaction peut nécessiter des opérations de finition et de reprise par usinage de façon à obtenir le renfort 30. Ces opérations de reprise peuvent comporter :
- une opération de reprise du profil de la base 39 du renfort 30 de façon à l'affiner et notamment du profil aérodynamique du bord d'attaque 31 ;
- une opération de reprise des flancs 35, 37 ; cette étape consistant notamment au détourage des flancs 35, 37 et à l'amincissement des flancs intrados et extrados ;
- une opération de finition permettant d'obtenir l'état de surface requis.

La présente invention a été principalement décrite avec l'utilisation de tronçons métalliques à base de titane pour la réalisation de la structure fibreuse ; toutefois, le procédé de réalisation est également applicable avec n'importe quelle matière métallique présentant des propriétés permettant le formage superplastique et/ou le soudage diffusion.

L'invention a été particulièrement décrite pour la réalisation d'une structure fibreuse pour la réalisation d'un renfort métallique d'une aube composite de turbomachine ; toutefois, l'invention est également applicable à la réalisation d'une structure fibreuse pour la réalisation d'un renfort métallique d'une aube métallique de turbomachine, pour la réalisation d'un renfort métallique d'un bord de fuite d'une aube de turbomachine, pour la réalisation d'un renfort métallique d'hélice.

Les autres avantages de l'invention sont notamment les suivants :
- réduction des coûts de réalisation ;
- réduction du temps de réalisation ;
- simplification de la gamme de fabrication ;
- réduction des coûts matière.

## Revendications

1. Procédé de fabrication (200) d'une structure fibreuse métallique en trois dimensions (100) par tissage au moyen de fils de trame métalliques et de fils de chaîne métalliques **caractérisé en ce qu'**il comporte une étape (230) de tissage en trois dimensions par tissage successif d'une pluralité d'agrafes métalliques (301') faisant office de fils de trame, chaque agrafe métallique (301') étant formée par un fil recourbé et comportant deux branches (302, 303) d'extrémité reliées entre-elles par un élément de jonction (304), ledit tissage successif étant réalisé par introduction de chacune des branches (302, 303) de chacune desdites agrafes métalliques (301') dans au moins une foulée (305, 306), chaque foulée (305, 306) étant formée par deux fils de chaîne.

2. Procédé de fabrication (200) selon la revendication précédente **caractérisé en ce que** préalablement à ladite étape (230) de tissage ledit procédé comporte une étape (220) de réalisation desdites agrafes métalliques (301') par pliage de tronçons métalliques (301) de forme rectiligne.

3. Procédé de fabrication (200) selon l'une des revendications 1 à 2 **caractérisé en ce que** préalablement à ladite étape (220) de pliage ledit procédé comporte une étape (210) de découpe d'une pluralité de tronçons métalliques (301).

4. Procédé de fabrication (200) selon l'une des revendications 2 à 3 **caractérisé en ce que** lesdites agrafes métalliques (301') sont pliées lors de ladite étape de pliage (220) en forme de U et/ou en forme de V.

5. Procédé de réalisation d'une pièce massive **caractérisé en ce qu'**il comporte :
- les étapes de fabrication d'une structure fibreuse (100) selon l'une des revendications 1 à 4 ;
- une étape de pressage isostatique à chaud de ladite structure fibreuse (100) provoquant l'agglomération des fils métalliques de ladite structure fibreuse (100) de manière à obtenir une pièce massive.

6. Procédé de réalisation d'une pièce massive selon la revendication 5 **caractérisé en ce que** ladite pièce massive est un renfort métallique de bord d'attaque ou de bord de fuite d'aube de soufflante turbomachine.

7. Procédé de réalisation d'une pièce massive selon l'une des revendications 5 à 6 **caractérisé en ce que** ladite pièce massive est un renfort métallique d'hélice.

8. Structure fibreuse (100) réalisée par le procédé de fabrication selon l'une des revendications 1 à 4 **caractérisée en ce qu'**elle est formée par une pluralité de fils de chaine et une pluralité de fils de trame tissées, les fils de trame étant formés par des agrafes métalliques (301'), chacune des agrafes métalliques étant formée par un fil recourbé et comportant deux branches (302, 303) d'extrémité reliées entre elles par un élément de jonction (304).

9. Structure fibreuse (100) selon la revendication 9 **caractérisée en ce que** ladite pluralité de fils de chaîne et ladite pluralité de fils de trame sont des fils métalliques à base de titane et/ou des fils SiC-Titane et/ou des fils SiC-Bore et/ou des fils SiC-SiC.

## Patentansprüche

1. Herstellungsverfahren (200) einer dreidimensionalen, faserigen Metallstruktur (100) per Weben mittels metallischer Schussfäden und metallischer Kettfäden, **dadurch gekennzeichnet, dass** es einen dreidimensionalen Webschritt (230) per sukzessivem Weben einer Vielzahl von Metallklammern (301') umfasst, die als Schussfäden dienen, wobei jede Metallklammer (301') durch einen zurückgekrümmten Draht gebildet ist und zwei Endzweige (302, 303) umfasst, die untereinander durch ein Verbindungselement (304) verbunden sind, wobei das genannte sukzessive Weben per Einführen jedes Zweiges (302, 303) jeder der genannten Metallklammern (301') in wenigstens ein Fach (305, 306) realisiert ist, wobei jedes Fach (305, 306) durch zwei Kettfäden geformt ist.

2. Herstellungsverfahren (200) gemäß dem voranstehenden Anspruch, **dadurch gekennzeichnet, dass** das genannte Verfahren vor dem genannten Webschritt (230) einen Realisierungsschritt (220) der genannten Metallklammern (301') durch Falten von metallischen Teilstücken (301) in geradliniger Form umfasst.

3. Herstellungsverfahren (200) gemäß einem der Ansprüche 1 bis 2, **dadurch gekennzeichnet, dass** das genannte Verfahren vor dem genannten Faltschritt (220) einen Ausschneideschritt (210) einer Vielzahl von metallischen Teilstücken (301) umfasst.

4. Herstellungsverfahren (200) gemäß einem der Ansprüche 2 bis 3, **dadurch gekennzeichnet, dass** die genannten Metallklammern (301') bei dem Faltschritt (220) in U-Form und / oder in V-Form gefaltet werden.

5. Realisierungsverfahren eines massiven Stücks, **dadurch gekennzeichnet, dass** es umfasst:
- die Herstellungsschritte einer faserigen Struktur (100) gemäß einem der Ansprüche 1 bis 4;
- einen isostatischen Heißpressschritt der genannten faserigen Struktur (100), der die Verdichtung der metallischen Drähte der genannten faserigen Struktur (100) derart hervorruft, dass ein massives Stück erhalten wird.

6. Realisierungsverfahren eines massiven Stücks gemäß Anspruch 5, **dadurch gekennzeichnet, dass** das genannte massive Stück eine Metallverstärkung der Vorderkante oder der Hinterkante der Gebläseschaufel einer Turbomaschine ist.

7. Realisierungsverfahren eines massiven Stücks gemäß irgendeinem der Ansprüche 5 bis 6, **dadurch gekennzeichnet, dass** das genannte massive Stück eine Metallverstärkung eines Propellers ist.

8. Faserige Struktur (100), die durch das Herstellungsverfahren gemäß einem der Ansprüche 1 bis 4 realisiert ist, **dadurch gekennzeichnet, dass** sie durch eine Vielzahl von gewebten Kettfäden und eine Vielzahl von gewebten Schussfäden geformt ist, wobei die Schussfäden durch Metallklammern (301') geformt sind, wobei jede Metallklammer durch einen zurückgekrümmten Draht gebildet ist und zwei Endzweige (302, 303) umfasst, die miteinander durch ein Verbindungselement (304) verbunden sind.

9. Faserige Struktur (100) gemäß Anspruch 9, **dadurch gekennzeichnet, dass** die genannte Vielzahl von Kettfäden und die genannte Vielzahl von Schussfäden metallische Drähte auf Titanbasis und / oder SiC-Titandrähte und / oder SiC-Bordrähte und / oder SiC-SiC-Drähte sind.

## Claims

1. A method of production (200) of a three-dimensional fibrous metal structure (100) by means of weaving with metal weft threads and metal warp threads, **characterised in that** it comprises a step (230) of three-dimensional weaving by successive weaving of a plurality of metal clasps (301') acting as weft threads, each metal clasp (301') being formed by a bent wire and comprising two end arms (302, 303) interconnected by a junction element (304), said weaving being carried out by the introduction of each of the arms (302, 303) of each of said metal clasps (301') into at least one shed (305, 306), each shed (305, 306) being formed by two warp threads.

2. The method of production (200) according to the preceding claim, **characterised in that**, prior to said weaving step (230), said method comprises a step (220) for producing said metal clasps (301') by bending metal segments (301) of rectilinear shape.

3. The method of production (200) according to any one of claims 1 or 2, **characterised in that**, prior to said bending step (220), said method comprises a step (210) for cutting a plurality of metal segments (301).

4. The method of production (200) according to any one of claims 1 to 3, **characterised in that** said metal clasps (301') are bent during said bending step (220) into a U-shape and/or a V-shape.

5. A method of producing a solid part, **characterised in that** it comprises:
- the steps for producing a fibrous structure (100) according to any one of claims 1 to 4;
- a step for hot isostatic pressing of said fibrous structure (100) causing the agglomeration of the metal threads of said fibrous structure (100) so as to produce a solid part.

6. The method of producing a solid part according to claim 5, **characterised in that** said solid part is a metal reinforcement of the leading edge or trailing edge of the fan blade of a turbine engine.

7. The method of producing a solid part according to any one of claims 5 to 6, **characterised in that** said solid part is a metal reinforcement of a propeller.

8. A fibrous structure (100) produced by the method of production according to any one of claims 1 to 4, **characterised in that** it is formed by a plurality of woven warp threads and a plurality of woven weft threads, the weft threads being formed by metal clasps (301'), each metal clasp (301') being formed by a bent wire and comprising two end arms (302, 303) interconnected by a junction element (304).

9. The fibrous structure (100) according to claim 9, **characterised in that** said plurality of warp threads and said plurality of weft threads are metal threads based on titanium and/or SiC-titanium threads and/or SiC-boron threads and/or SiC-SiC threads.
